Europäisches Patentamt

European Patent Office

Office européen des brevets

(19)

(11) **EP 1 615 449 A1**

(12) **EUROPEAN PATENT APPLICATION**

(43) Date of publication:
**11.01.2006 Bulletin 2006/02**

(51) Int Cl.:
*H04N 9/31* (2006.01)

(21) Application number: **04300424.1**

(22) Date of filing: **05.07.2004**

| (84) Designated Contracting States: **AT BE BG CH CY CZ DE DK EE ES FI FR GB GR HU IE IT LI LU MC NL PL PT RO SE SI SK TR** Designated Extension States: **AL HR LT LV MK** | (72) Inventor: **Doser, Ingo** **78166, Donaueschingen (DE)** |
| --- | --- |
| (71) Applicant: **Thomson Licensing** **92100 Boulogne Billancourt (FR)** | (74) Representative: **Rossmanith, Manfred** **Deutsche Thomson-Brandt GmbH** **European Patent Operations** **Karl-Wiechert-Allee 74** **30625 Hannover (DE)** |

(54) **Sequential colour display device**

(57)     A colour wheel for a sequential colour display is suggested, which has primary colour filter segments (R, G, B) and at least one secondary colour filter segment (C, M, Y). A driving scheme for the inventive colour wheel as well as for known colour wheels reduces the colour separation by temporally locating the light pulses required for generating a desired colour as close together as possible. In one embodiment, the pulse length increases in a direction away from a transition between a secondary colour filter and a corresponding complementary primary colour filter for light pulses of the respective colours. A driving circuit extracts driving signals for primary and secondary colours from primary colour input signals. The driving circuit further compares the driving signals with predetermined limiting values for preventing clipping.

**Fig. 16**

**Description**

The invention relates to a display device which reproduces multi-colour images by sequentially displaying monochromatic images.

In sequential colour display systems of the above-mentioned type a colour sequence is created by a rotating wheel or disc having colour filter segments of different single colours. The images of different single colours are displayed successively and the human eye integrates the displayed images to one image showing a multiplicity of compound colours. The resulting image is in the following referred to as multi-colour image or full colour image. For additive colour mixing the colours used are preferably the primary colours red, green and blue. The single colour images are reproduced by projecting multispectral, essentially white light through the rotating colour wheel onto an imaging device, e.g. a DLP or "Digital Light Processing" device. The imaging device may appear in the form of a DMD or "Digital Micromirror Device", but other types of imaging devices exist, e.g. GLV, which is an acronym for "Grating Light Valve", or LCOS, an acronym for "Liquid Crystal On Silicon" systems, or even LCD, or "Liquid Crystal Display". The latter systems are analogue or mixed analogue-digital systems rather than pure digital systems. The imaging device is typically divided into pixels that are arranged in rows and columns. The projected monochromatic light is either reflected or transmitted by the imaging device onto a screen for viewing. The image content determines for each pixel the amount of light transferred to the screen.

If, for example, similar amounts of red, green and blue light are displayed in fast sequence, the eye perceives white coloured light. In the following the term "amount" of light will be used interchangeable with "intensity" or "brightness" of light, or an integration of light over periods of time, unless otherwise noted. Additive colour mixing as described above requires a rate of change of the colours that is above an observer's eye's capability to discern individual images.

However, sequential colour display systems of the above-mentioned type suffer from a phenomenon known as "colour break-up", "colour separation", or "rainbow effect". This phenomenon occurs when the eye of an observer is rapidly moving across the screen.

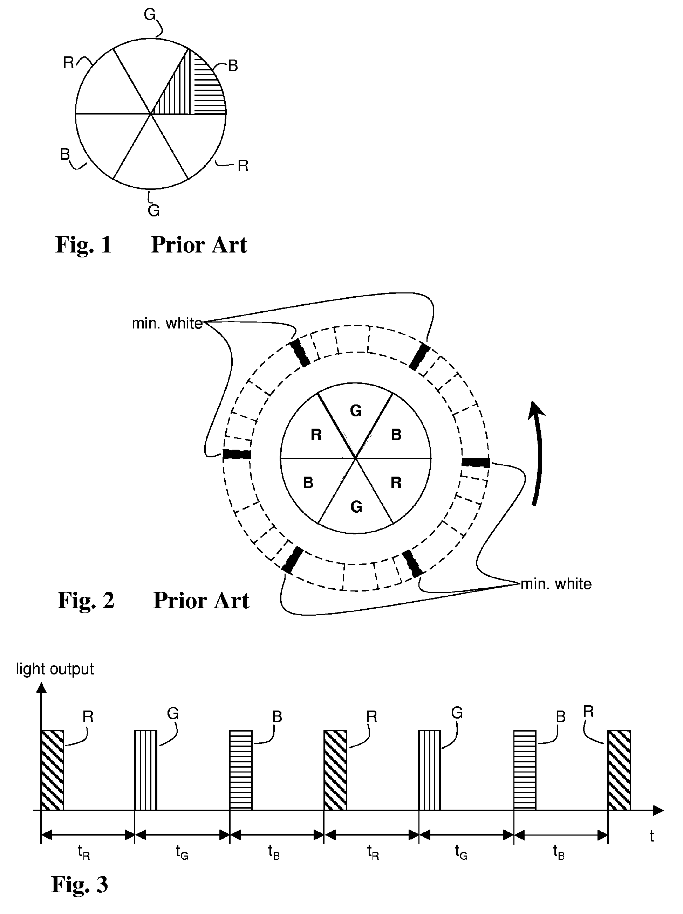

In the following an explanation of the rainbow effect is given. If an image of a given colour consists of a composition of all three primary colours, then in a conventional RGB colour wheel display, the image is displayed by sequentially igniting light pulses of the respective primary colours. For simplification, a light pulse of minimum length is assumed, i.e. a light pulse of a duration representing the least significant bit, or LSB, of a driving circuit. The light pulses are ignited for example in a sequence of: one pulse in the red colour segment, one pulse in the green colour segment, and one pulse in the blue colour segment. Since the segments of the colour wheel are of fixed size and the rotational speed of the colour wheel is constant, when using conventional coding the time between the instance of the ignition of the light pulse for the first primary colour and the ignition of the light pulse for the last primary colour is greater than the time for two of the three segments to pass the imaging device, and smaller than or equal to the time for three colour segments to pass the imaging device, depending on the coding or driving scheme. In the following the terms "coding" or "driving scheme" are used interchangeable for the distribution of light pulses of various length across a colour filter segment, unless otherwise noted. It is further assumed that the coding for all colour filter segments is similar, which is the case in today's sequential colour display apparatus. A typical known coding scheme is shown in Figure 2. The positions of minimum length light pulses for displaying a white image with the lowest possible brightness are marked in solid black. Three respective pulses required for displaying a white image are denoted "min. white". When displaying one complete multi-colour image composed of monochrome images in the three primary colours, the temporal distance between the ignition of the first and the last light pulse of one LSBs length in each colour filter segment is equal to the time it takes for two colour segments to pass across the imaging device. Figure 1 shows an example of a known colour wheel having six colour filter segments with each colour found in two respective filter segments. The primary colours are denoted with the references R, G and B for red, green and blue. Figure 3 shows a typical driving scheme for the colour wheel of Figure 1. In the Figures the primary colours are represented by respective different patterns, which are retained throughout this specification. For a better understanding the colour segments of the colour wheel are assumed equal-sized, which in reality is not necessarily the case.

The driving scheme shown in Figure 3 illustrates the ignition of the respective light pulse at the beginning of each colour passing across the imaging device. The time for passing across the imaging device is equal for each filter segment. The first pulse to be ignited is the pulse R for red, at the left side of the figure. After the time $t_R$ the red segment has passed the imaging device and the green segment arrives at the imaging device. Now the pulse G for green is ignited. After the time $t_G$ the green segment has passed the imaging device and the blue segment arrives at the imaging device. Now the pulse B for blue is ignited, and so on. The time for three pulses for each primary colour to be ignited is longer than the time for two colour segments to pass across the imaging device and shorter than the time for three colour segments to pass across the imaging device. One revolution of the colour wheel is completed when all six colour filter segments have passed the imaging device.

In order to further elucidate the generation of the rainbow effect a sequential colour display is assumed having screen 2 with a 50 inch or 127 cm diameter. The display has a display ratio of 16:9, hence the screen width, i.e. its horizontal dimension, is 96 cm. The display device uses a six segment RGB colour wheel with equally sized segments.

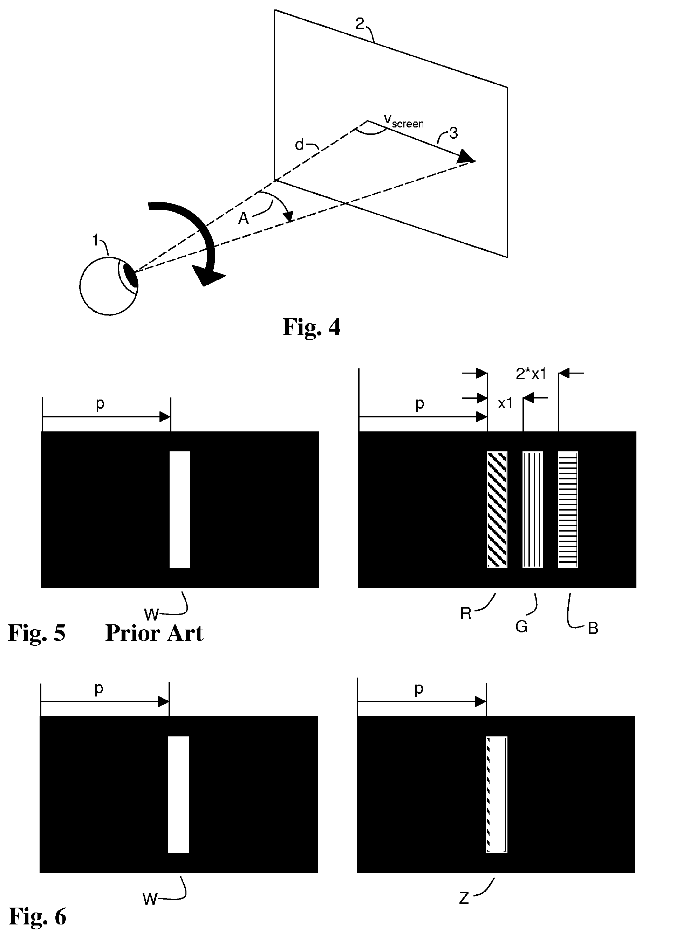

Each of the segments thus covers an angle of 60 degrees of the colour wheel. The rotational speed of the colour wheel is 1 full rotation per picture period. At a frame rate of 50 Hz this corresponds to a time of 20 ms for one rotation. The time for one colour segment to pass across the imaging device is equal to the time for one frame period divided by the number of colour segments per frame period. In the example the time $t_S$ for each colour segment is equal to $t_S = 10/3$ ms. It is assumed that the observer 1 is located at a distance d of 3 m from the screen. The above described test set-up is shown in Figure 4.

Figure 5 shows the effect of colour separation compared to an ideal reproduction. The test image is a vertical white bar W located in the centre of the screen. Ideally, the test image would be reproduced as shown on the left side of the figure. The image shown on the right side of the figure is a schematic representation of how the observer perceives the three sequentially reproduced colours. The figure shows the perceived image after half a revolution of the colour wheel. After a complete revolution of the colour wheel the shown separated pattern would be present twice.

In the following calculation example the angular speed A of the eye's movement for a colour separation x1 of 10 cm between each primary colour on the screen is calculated. The total colour separation between the first primary and the last primary amounts to $2 \cdot \chi 1$.

$$x1 = v_{Screen} \cdot t_S \qquad (1)$$

wherein the $v_{Screen}$ is the speed of the eye's focal point in a plane on the screen and $t_S$ is the time for one colour segment to pass across the imaging device, until the next segment may be illuminated to contribute to the image. The equation may be rearranged to obtain $V_{Screen}$ :

$$v_{Screen} = \frac{x1}{t_S} \qquad (2)$$

Now the speed $v_{Screen}$ in the screen plane has to be translated into the angular speed A of the eye's movement:

$$v_{Screen} = \tan(A) \cdot d \qquad (3)$$

wherein A is the angular speed in degrees/s and d is the distance of the viewer to the screen in metres. Hence equations (2) and (3) may be set equal:

$$\frac{x1}{t_{Segment}} = \tan(A) \cdot d \qquad (4)$$

and thus rearranged:

$$A = \arctan(\frac{x1}{t_{Segment} \cdot d}) \qquad (5)$$

In the example:

$$A = \arctan(\frac{0.1m}{\frac{10}{3000}s \cdot 3m}) = \arctan(10) = \frac{84.3°}{s} \qquad (6)$$

The values assumed in the example above are not realistic, i.e. they serve for a better understanding only. The rotational speed of the colour wheel may be higher and the colour segments are not necessarily equally sized. However, the explanation holds true for real display devices.

In view of the existing problem of colour separation it is desirable to provide a sequential colour display system that reduces or avoids the rainbow effect or colour break-up, and an according driving scheme. It is further desirable to present a driving scheme to reduce the colour separation in displays using prior art colour wheels.

The present invention reduces colour separation by using a colour filter arrangement with primary and secondary colour filters in combination with an adapted coding or driving method. In another embodiment of the invention, a modified coding scheme allows for reducing colour separation in display devices using known colour filter arrangements. In the following the term colour wheel is used as a synonym for a colour filter arrangement according to the invention.

The inventive colour wheel allows for composing colours by using only two light pulses each passing through one segment of the colour wheel, instead of three light pulses as is known from the prior art. The inventive colour wheel has at least four colour filter segments, amongst them three primary colour filter segments and at least one secondary colour filter segment. In one embodiment filters for all three primary and secondary colours, respectively, are present resulting in a six-segment colour wheel. In a preferred embodiment at least one primary colour filter has its complimentary secondary colour filter arranged adjacent on the colour wheel.

An inventive pulse coding or driving scheme provides that the LSBs, i.e. the least significant bits, or, in other words, light pulses of minimum-length, are located as close as possible to a common segment boundary of a primary colour filter and the associated complementary secondary colour filter. In general the light pulses of two selected adjacent colour filters are located as close as possible to the transition from one colour filter segment to the other. This reduces the total time needed to display all colours necessary for displaying the desired full colour image.

In a preferred embodiment of the invention the colour wheel is separated into six filter segments of the primary colours red, green, blue and the secondary colour cyan, magenta and yellow (RGBCMY). The inventive colour wheel is in the following referred to as RGBCMY colour wheel, whereas the prior art colour wheel is referred to as RGB colour wheel.

Throughout this specification the term colour wheel is used for all arrangements in which a multiplicity of colour filters is sequentially brought into a light path between a multispectral light source and an imaging device. The invention is thus covering other filter arrangements such as barrel-shaped colour filters, filter arrangements with a polygonal cross section, belt-type filter arrangements or the like. The invention is suitable for all types of colour filters, i.e., translucent or reflective.

The invention will be described in the following with reference to the drawing. In the drawing

Fig.1    shows a prior art six-segment colour wheel;
Fig.2    demonstrates the local distribution of light pulses for a white image in a prior art colour wheel;
Fig.3    depicts the temporal distribution of the light pulses of Fig.2;

Fig.4    shows a test set-up for demonstrating colour separation;
Fig.5    is a simplified image of a test pattern and the colour separation in a prior art display;
Fig.6    is a simplified image of the test pattern and the reduced colour separation in a display according to the invention;
Fig.7    schematically shows a colour wheel according to the invention;
Fig.8    shows the local distribution of light pulses for displaying white image content of lowest possible brightness;
Fig.9    schematically demonstrates the inventive distribution of pulse lengths representing various brightness levels across the colour filter segments;
Fig.10   depicts the temporal distribution of the light pulses of Fig.9;
Fig.11   shows the ideal distribution of light pulses for different brightness levels;
Fig.12   presents an improved distribution of light pulses for different brightness levels;
Fig.13   schematically depicts the local distribution of minimum length light pulses in a prior art RGB colour wheel according to an inventive driving scheme;
Fig.14   schematically shows the temporal distribution of the light pulses of Fig. 13;
Fig.15   shows the spoke distribution of a prior art RGB colour wheel;
Fig.16   depicts the spoke distribution of the inventive RGBCMY colour wheel;

Fig.17     shows the colour rooms for the prior art RGB and the inventive RGBCMY colour wheel;

Fig.18     illustrates a first schematic embodiment of a colour wheel according to the invention with four colour filter segments;

Fig.19     shows the temporal distribution of light pulses of an inventive driving scheme for the colour wheel of Fig.18;

Fig.20     shows a second schematic embodiment of a colour wheel according to the invention with four colour filter segments;

Fig.21     is a first exemplary circuit for driving a colour wheel according to the invention; and

Fig.22     is a second exemplary circuit for driving a colour wheel according to the invention.

In the drawing, same or similar elements are referenced by the same reference symbols.

Figures 1 to 5 have already been discussed above and are, therefore, not referred to again in detail.

For better understanding the invention, the following assumptions are made:

- The colour coordinates and density of the secondary colour filter segments are similar to the addition of their corresponding primary colour filter segments. For instance, the magenta colour filter segment coordinate and density is equal to the result of an addition of the blue colour filter segment and the red colour filter segment. The term density describes the amount of light passing through the filter.

- In order to display the lowest intensity white light, a minimum light pulse length, i.e. the shortest possible light pulse that the imaging device may produce, or 1 LSB, is used. The lowest intensity white may thus be composed using either:

  - 1 LSB of red and 1 LSB of green and 1 LSB of blue, or
  - 1 LSB of magenta and 1 LSB of green, or
  - 1 LSB of cyan and 1 LSB of red, or
  - 1 LSB of yellow and 1 LSB of blue

Throughout the following specification the term LSB refers to the minimum pulse length that can be reproduced by the imaging device.

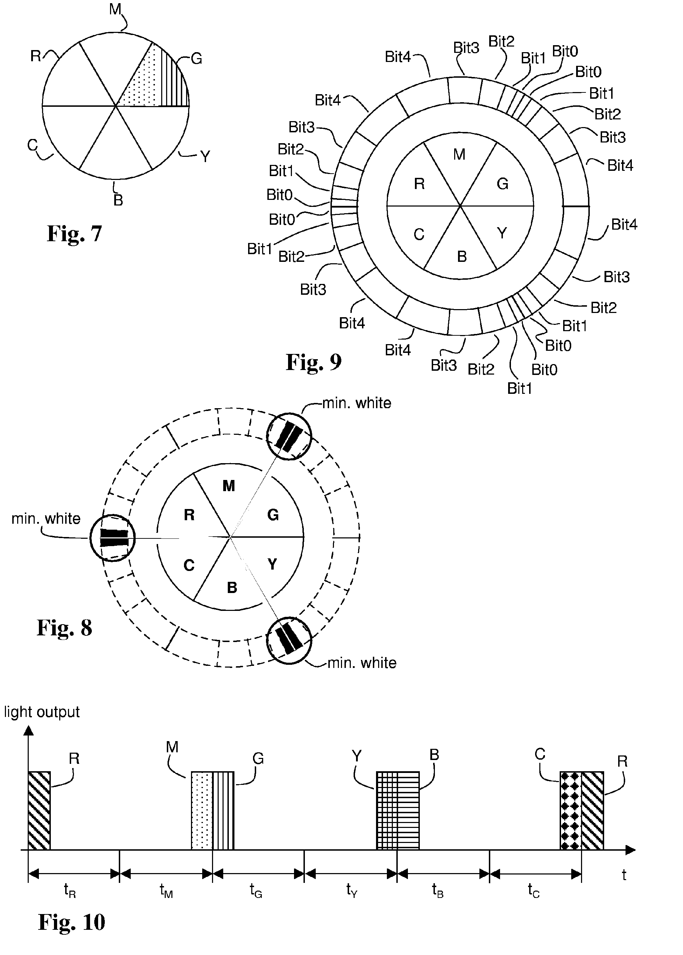

An exemplary arrangement of the colour filters of an inventive RGBCMY colour wheel with six colour filter segments is shown in Fig. 7. For comparison purposes it is referred to the positions of the LSBs in a six segment RBG colour wheel known from the prior art shown in Fig. 2. In Fig. 8 suitable pairs of LSBs for generating the desired lowest intensity white output are shown. The LSBs are located close to each other on the respective adjacent colour filters of a primary colour and its complementary secondary colour. The next longer light pulses are located symmetrically around the transition between the two filter segments, as shown in the schematic distribution of pulse lengths depicted in Fig. 9. The arrangement of the colour filters in the inventive RGBCMY colour wheel allows for reducing the temporal distance between the light pulses that are composing the desired image.

A first embodiment of the inventive driving scheme is designed to suit the needs of a colour display system that uses the inventive RGBCMY colour wheel. A second embodiment of the inventive driving scheme advantageously shortens the time between individual light pulses that are used for composing a desired output in a sequential colour display system for a known RGB colour wheel.

The first embodiment of the inventive driving scheme or pulse coding is optimised so as to ensure a small temporal distance between the LSBs of the two segments lit for displaying a desired colour on the screen, thereby significantly reducing the rainbow effect.

In a real application a minimum time between the two LSBs is forced by the "spoke" size. A spoke is present at the boundary of two segments. The light spot that illuminates the segments has a certain diameter. During a short time the light spot illuminates parts of both segments, creating a possibly undesired colour. This short time is also referred to as spoke time. The spoke size is the physical size of the aperture at the colour wheel that is used for light transmission. This aperture is kept as small as possible. However, it is large enough to take about 10° of the colour wheel at each spoke. 10° is equal to 0.5 milliseconds in the example discussed with regard to the prior art. The total time that passes until all pulses required are lit is the pulse duration of each one out of the two light pulses, which, in the example are assumed to have equal length, plus the spoke time.

In the following the colour separation x1 is calculated for a display with an inventive RGBCMY colour wheel, using the test set-up shown in Fig. 4 that was used before in the example discussed with reference to Fig. 5. For the calculation the angular speed calculated in the discussion of the prior art is used: A = 84.3°/sec. As before, the resolution of the imaging device is assumed to be 5 bit, the LSB is thus $1/2^5$. It is recalled that other resolutions are conceivable. With a distance d to the screen of 3 m the time $t_{x1}$ between the illumination of the two pulses is:

$$t_{x1} = t_{spoke} + t_{pulse} = \frac{10°}{360°} \cdot 0{,}02s + \frac{60° - 10°}{360°} \cdot 0{,}02s \cdot \frac{1}{2^5} = 0{,}000642s \quad (7)$$

Using the values for the angular speed from the aforementioned example $V_{screen}$ calculates as:

$$v_{screen} = \tan(A) \cdot d = \frac{10}{s} \cdot 3m = 30\frac{m}{s} \quad (8)$$

resulting in x1:

$$x1 = v_{screen} \cdot t_{x1} = 30\frac{m}{s} \cdot 0{,}000642s = 0{,}01926m \quad (9)$$

x1 amounts to a mere 2 cm, compared to 20 cm from the prior art display this is an improvement by a factor of 10.

On its right side Fig. 6 shows a schematic representation of the reduced colour separation, on its left side the ideal image is shown for comparison. Small areas showing mixed colours are located on the left and right sides of the white bar.

In Fig. 8 the location of light pulses for generating white light using an exemplary PWM coding scheme according to the invention is shown. In the figure the coding scheme is designed such that for displaying white light the yellow and blue segment may be illuminated. In case the colour to be displayed is somewhat bluish the blue segment may be illuminated longer. Alternatively, white light can be produced by lighting the magenta and the green segments, or the cyan and red segments. In the figure, the segments are marked by a circle surrounding the LSB of each segment and the label "min. white".

Fig. 10 shows the temporal distribution of the pulses according to Fig. 8.

A schematic distribution of the various bits of the imaging device, i.e. light pulse lengths, over the colour filter sections is shown in Fig. 9.

The invention advantageously allows for creating white light that has a certain hue, since there is a 2-pulse combination for white of any hue. For generating a greenish white magenta and green may be used. For generating a reddish white cyan and red may be used.

The inventive colour wheel and the driving scheme allows for having the two pulses required to generate the desired output as close together as possible for all kinds of hue.

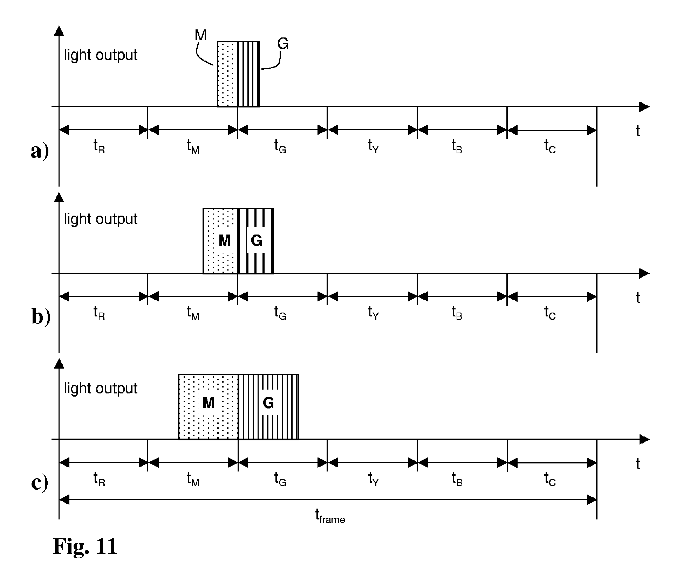

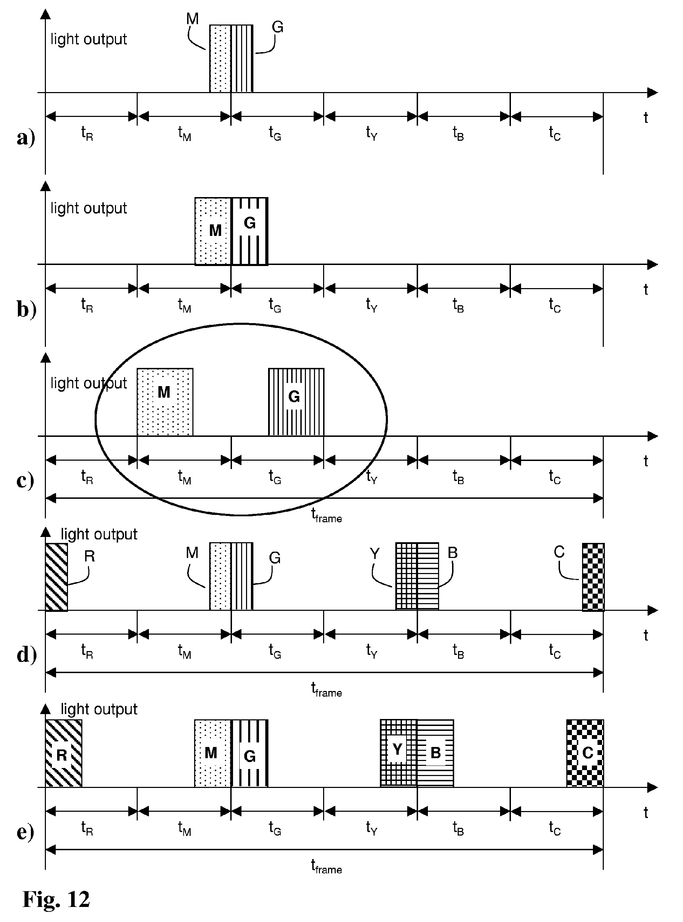

With rising video levels, i.e. increasing brightness of the displayed image, pulses of other length are to be used. An ideal distribution of the LSB and the following bits is shown in Figure 11. In Fig. 11a) two pulses of a first duration are located symmetrically around a transition from one secondary to its adjacent primary colour. In the figure it is the transition from the magenta to the green colour filter, resulting in a white image of a first brightness level to be displayed. In Fig. 11b) the duration of the pulses is increased, resulting in a higher brightness. In Fig. 11c) the duration is again increased resulting in an even higher brightness. However, referring back to the exemplary distribution of the pulses across the colour filter segments shown in Fig. 9, in order to avoid colour separation, it must be avoided distribute the individual light pulses too far away from each other and the secondary-primary transition, or, even worse, to light e.g. "bit 4" alone. In the Fig. 9 "bit 4" is located rather far away from the transition between a primary colour filter and the associated secondary colour filter. The situation is shown in Fig. 12. Fig. 12a) and 12b) demonstrate the ideal situation found in Fig. 11. Fig. 12c), however, demonstrates the temporal position of light pulses that correspond to bits which are rather far away from the transition, as mentioned above. In order to avoid the large temporal gap between the pulses of the two colours to be ignited, it is rather useful to split the total required pulse length for a given brightness level into respective shorter pulses located around the other transitions between appropriate primary and secondary colour filter segments. An example is shown in Fig. 12d) and 12e).

In order to avoid colour separation the inventive driving scheme includes video processing that accomplishes splitting up critical bit weights and dispersing them among the segments, as is shown in Fig. 12. For video levels which cannot be dispersed satisfactorily among the filter segments the video processing prevents those video levels from being used. The thus missing levels are compensated for by dithering between adjacent video levels.

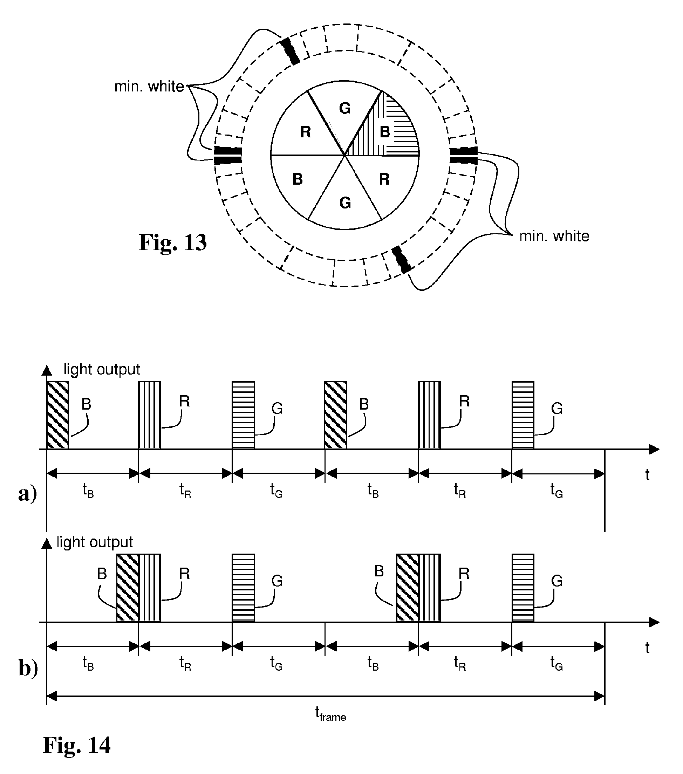

An embodiment of the inventive coding scheme also allows for improvement of colour separation when an RGB colour wheel as known from the prior art is used. Figure 13 exemplarily shows the local distribution of the bits along the segments in that case, for a six segment RGB colour wheel. In Fig. 14a) the temporal distribution of the light pulses in a known driving scheme and in Fig. 14b) the driving scheme according to the invention are shown on top of each other.

In the inventive coding scheme the coding order of one of the primary colours is reversed with respect to the remaining primary colours. In the new coding order the distance between all three LSBs is one segment plus one LSB, as can be seen from Figure 13. The distribution of the light pulses of various length is indicated by the dashed lines. Making the same calculations as for the example in Fig. 5 results in the colour separation almost halved compared with the prior art.

In the following the difference of the spoke types present in known RGB colour wheels and in the inventive RGBCMY colour wheel is illustrated. This is important when a "Spoke Light Recovery" driving scheme is used. The "Spoke Light Recovery" driving scheme is designed to recycle the light that is otherwise lost during spoke time. The main difference is that the RGB colour wheel has two similar sets of spokes while the inventive RGBCMY colour wheel has two different sets of spokes.

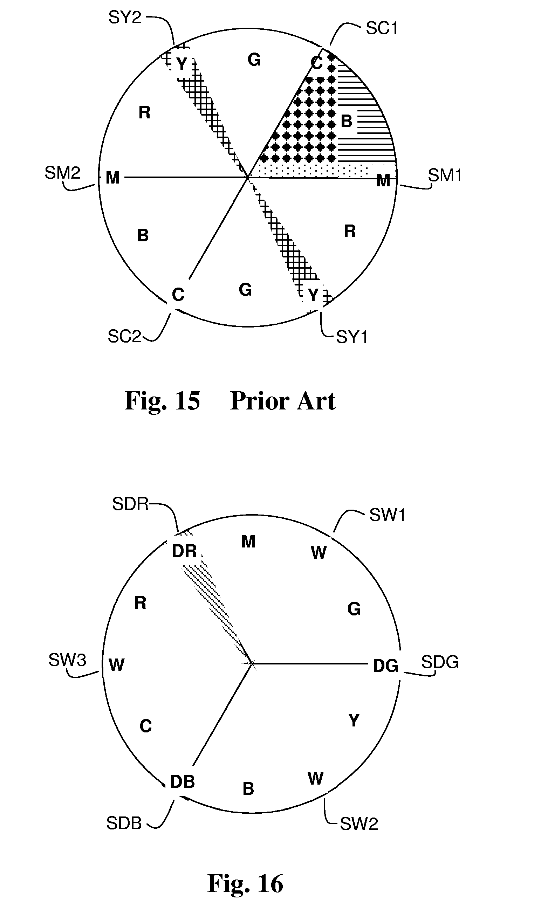

In the inventive RGBCMY colour wheel shown in Fig. 16, during one full revolution, a first spoke set consisting of three "white spokes" SW1 through SW3 and a second spoke set are passing across the imaging device. The second spoke set consists of one "de-saturated red spoke" SDR, one "de-saturated blue spoke" SDB and one "de-saturated green spoke" SDG. Thus the spoke set configuration is already given while for the RGB colour wheel there is a greater degree of freedom in the configuration of the spoke sets. In the known RGB colour wheel, as shown in Fig. 15, spoke set 1 could, for example, consist of one "magenta spoke" SM1, one "cyan spoke" SC1 and one "yellow spoke" SY1.

The fact that the inventive colour wheel has "white spokes" allows for using a single white spoke for boosting white light. However, care has to be taken since the spoke actually consists of a transition from one secondary to a primary, or vice versa. Despite that, the "white spokes" are those spokes with the highest possible light transmission for this type of colour wheel.

For easier understanding the behaviour of the inventive RGBCMY colour wheel some assumptions are made. It is to be noted that these assumptions are made for an easier understanding only. Other configurations are possible and lie within the scope of the invention.

1. The magenta segment creates light hitting the DMD that has the same properties in terms of colour coordinates and brightness as the hypothetical simultaneous incidence of light from the red segment and from the blue segment of the same colour wheel. The same applies for the yellow spoke and the red and green primary colours, and for cyan, blue and green, respectively.

2. "White light" is obtained by determining the integral of spectral portions of light during a 360° rotation of the colour wheel. That "natural" white light, or in other words "white point" with a given colour temperature is assumed to be equal to the desired white point. No individual colour is attenuated for achieving white light. Thus, white is achieved by adding up equal amounts of light of the colours red, blue, green, magenta, cyan and yellow.

3. An RGB colour wheel for comparison is defined to have red, green and blue colour segments of the same specification as the red, green, blue colour segments of the inventive RGBCMY colour wheel. The RGB colour wheel has two red, two blue and two green segments.
Consequently, white is achieved by adding up light passing through two red segments, two green segments and two blue segments.

The RGBCMY colour wheel as shown in Fig. 16 has one red segment R, one blue segment B, one green segment G, one magenta segment M, one cyan segment C and one yellow segment Y. In general, magenta is achieved by adding one part blue and one part red, yellow by adding one part green and one part red, and cyan by adding one part green and one part blue. With regard to the assumptions made above, white is achieved by adding one part of each red, green, blue, magenta, cyan and yellow. For the inventive RGBCMY colour wheel this equals to adding up red, green, blue, blue & red (=magenta), blue & green (=cyan) and red & green (=yellow). In the foregoing the secondary colours were listed as a composition of their primary colours. Sorted according to the primary colours white light is achieved by adding up three parts of each red, green and blue.

The brightness for white of the RGBCMY colour wheel is increased by a factor of 1.5 compared to the prior art RGB colour wheel, which is a 50% increase. The increased maximum brightness advantageously enhances the dynamic range of the display system.

The prior art RGB colour wheel uses the two red segments to produce pure red colour. The RGBCMY colour wheel uses only one red segment to produce pure red colour. 1/3 of the red part contributing to white output is taken from the red colour segment. The other parts contributing are taken from the magenta and the yellow segments. The relative brightness of a pure colour output compared to white output is reduced. In the example above the red light output of the RGBCMY colour wheel is 1/3 compared to the prior art RGB colour wheel.

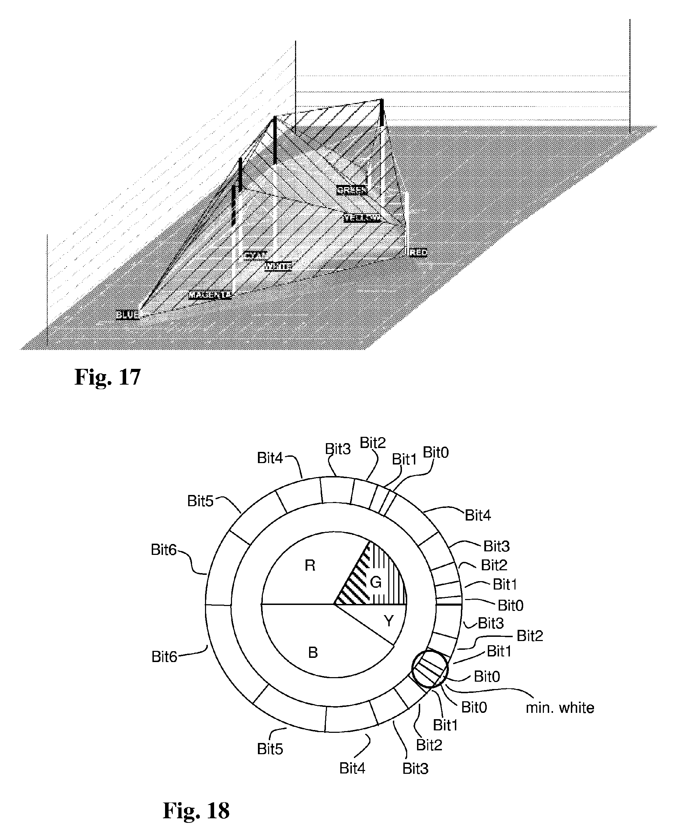

Figure 17 shows the colours that can be reproduced with RGB and RGBCMY colour wheels. The colour rooms are shown as "tents" with "tent poles". There are two tents, a black one, which represents the colour room of the RGBCMY colour wheel, and a white one, which represents the colour room of the RGB colour wheel. The outer tent poles of the tents are representing the primary colours red, green and blue. The tent poles that are located at the outer rim of the tent in between of two primary colours are the mix colours, or the secondary colours. Secondary colours appear when two of the three primary colours are illuminated at the same time. In case of the RGBCMY colour wheel secondary colours appear when two of the three primaries are illuminated at the same time and the according secondary colour segment is illuminated. The centre tent pole is the white tent pole, that represents the sum of light from all colour segments.

The figure clearly shows that the tent poles are located in the same spots in terms of x and y coordinates for the RGB colour wheel as well as for the RGBCMY colour wheel. However, they have different heights. This is due to the assumptions made above. The black tent is significantly higher in the middle, while the tent poles located at the primary colour edges of the white tent are higher than the black tent poles. The dynamic range of the black tent is thus higher in the middle of the colour room where the mixed colours are located, while it is lower at the edges of the colour room, where the pure colours are located.

The proposed inventive RGBCMY colour wheel provides a reduction of the "rainbow effect" as explained above. Furthermore, it provides a significant enhancement of light output. However, a decrease in saturation for pure colours is to be noted, as discussed above. As can be seen in Figure 17, the colour gamut of the RGB colour wheel is not compatible to the RGBCMY colour gamut. In order to convert from one colour gamut to the other a control circuit is provided. This conversion can in principle be done by 3 methods, independently or in combination: Changing the hue, changing the saturation or changing the brightness of a particular pixel subject to the above mentioned effect. An according control circuit may be provided in the driving logic, or control stage. It is to be noted that out of these three possibilities changing the hue is less desirable and should be avoided. Changing the saturation is probably acceptable but may provide unwanted effects, especially on skin tones.

In order to compensate for the reduced saturation of pure colours, the settings for saturation and brightness are to be weightened.

Another way to compensate for the reduced saturation of pure colours is to use colour segments of different sizes for each individual colour, i.e. weighting the colour segments.

It is also conceivable to combine any of the aforementioned measures in order to improve the representation of colours.

In one embodiment of the invention secondary colours are used for improving the colour separation effect particularly for lower brightness levels. In this embodiment the size of the secondary colour segments is small compared to the size of the primary colour segments.

In one preferred embodiment the size of the secondary colour segments is about half of the size of the primary colour segments. The saturation vs. brightness calculation for this embodiment of the RGBCMY colour wheel reads in this case will be presented below. Indices "m" and "o" indicate the modified and the original RGBCMY colour wheel, respectively. The total brightness of red(m) amounts to 3/2 of the brightness of red(o) of the unmodified RGBCMY colour wheel. In the same way the total brightness for blue(m) amounts to 3/2 blue(o) and the total brightness for green(m) amounts to 3/2 green(o). The brightness for magenta(m) is 3/4 magenta(o), the brightness for yellow(m) is 3/4 yellow(o)and the brightness for cyan(m) is cyan(o).

The white output is calculated as the sum of 3/2 red plus 3/2 blue plus 3/2 green plus 3/4 red & blue (=magenta) plus 3/4 red & green (=yellow) plus 3/4 blue & green (=cyan). This sum can also be written as 9/4 red plus 9/4 blue plus 9/4 green. In this embodiment the brightness gain compared to the prior art RGB colour wheel is 1/4, or 25%. The brightness of the pure colours is 2/3rd, or 67% of the prior art RGB colour wheel's value. However, the colour separation is greatly reduced and the maximum white output level is increased, compared to the prior art.

In another embodiment of the invention the colour wheel is composed of three primary colour segments and at least one secondary colour segment. A first exemplary colour wheel according to this embodiment is depicted in Figure 18. This embodiment offers improved colour gamut for pure, saturated colours. The colour separation effect for white light at a low brightness level, or grey, is still reduced compared to the prior art by using the secondary colour segment and the complimentary primary colour segment.

In one embodiment the size of the colour segments is selected such that for full white, or 100% white, all colour segments are lit throughout the whole segment time. The primary colour segments that are not complimented by secondary colour segments have a reduced size compared to the colour segment which has a complimentary colour filter segment.

In another embodiment of the invention the size of the primary segments is selected such that for full white only the primary segments are illuminated for 100% of the segment's time. The at least one secondary colour segment is not used for achieving maximum brightness white.

In the example shown in Figure 18 the yellow secondary colour filter segment is used as an additional filter segment. In this example it is assumed that full white output is obtained by using all segments of the colour wheel all the time. Therefore, the red and green segments are reduced in size compared to the blue segment. This compensates for the red and green contribution from the yellow segment. In the exemplary embodiment shown in Figure 18, the secondary colour segment has a smaller size in order to obtain an increased colour gamut. However, other filter segment sizes are conceivable.

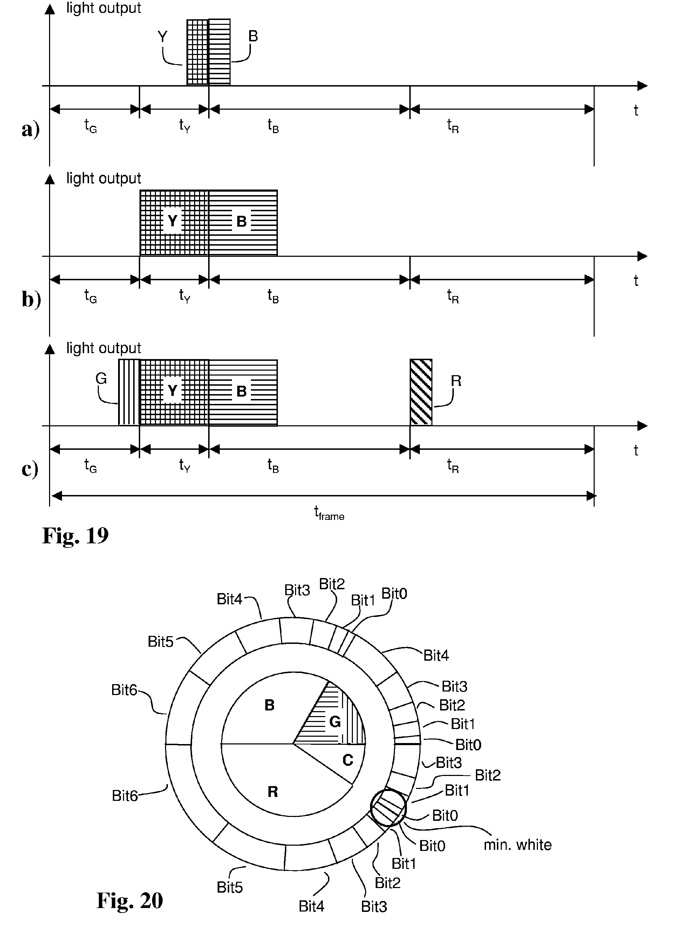

It is to be noted that also a cyan or magenta filter segment may be used as additional colour filter according to the invention, as exemplarily shown in Figure 20. With the colour wheel shown in the figure the reproduction of red is improved at expense of the reproduction of blue compared to the colour wheel that uses a yellow segment.

It is further conceivable to double or triple the number of the segments of the colour wheel in order to reduce the wheel's rotational speed, or the spin factor. Such a colour wheel may for example comprise two filter segments of each of the primary and secondary colours.

It is also conceivable to use a colour wheel that exhibits two segments for secondary colours in addition to the three segments of the primary colours.

Figure 19 shows a PWM coding scheme according to the invention for the inventive colour wheel of Fig.18. The coding scheme is designed such that for obtaining a white output LSBs in the yellow and blue filter segment are illuminated. In case the desired colour is somewhat bluish the weight of the pulses may be shifted towards the blue segment, e.g. by accordingly controlling the imaging device. In case the desired colour is somewhat greenish the yellow part is decreased and the green part is increased instead. In order to achieve the same total brightness the duration of the light pulses is balanced accordingly between the involved segments. As for the embodiments presented further above, the coding is designed so as to keep the time distance between the LSBs as small as possible.

If the desired colour is a somewhat reddish white, the yellow contribution is decreased and red is increased. In the figure, the temporal distance between the LSBs is almost 1/2 of the time for one full colour wheel rotation.

In one embodiment the red and the green segment are exchanged in order to optimise reproduction of red at the cost of the reproduction of green. However, the green segment is preferably smaller than the red segment. In order to achieve a minimum distance between the LSBs this is the optimum layout of the colour wheel when using a single yellow secondary colour segment.

For higher brightness levels of white, however, the primary colour segments are additionally illuminated after the secondary colour filter segment Y is fully used and the complementary primary colour filter segment B is used for the same duration. The additional periods of illumination, in the example green G are starting at the boundaries of the secondary colour segment, as is shown in Figure 19c), followed by red R. This maintains a minimum temporal distance between the light pulses composing a desired colour, thus still reducing colour separation effects.

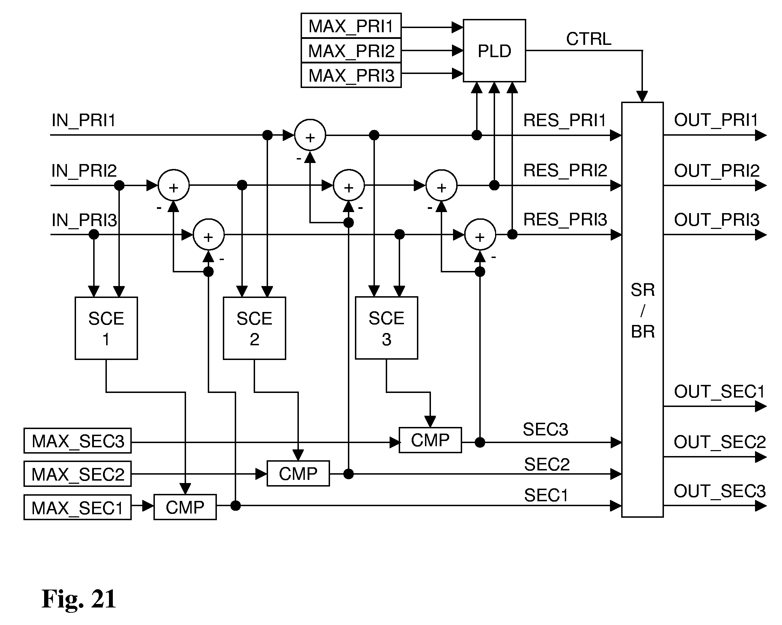

Figure 21 shows an inventive driving circuit for controlling an imaging device arranged with the inventive RGBCMY colour wheel. In the figure, input signals IN_PRI1 through IN_PRI3 are supplied to the circuit via respective inputs. Those signals are normally used to address the primary colour segments of a prior art RGB colour wheel. In the inventive driving circuit for the RGBCMY colour wheel, however, those signals are subjected a further signal processing. The driving circuit includes means SCE1 to SCE3 for extracting the secondary colours. The means may, e.g., include a look-up-table and/or adding or subtracting means. The driving circuit further exhibits means for preventing clipping. This is explained in the following: The primary colour value is reduced by extracted secondary colour. Further the remaining primary colour content RES_PRI1 to RES_PRI3 is compared with predetermined limit values MAX_PRI1 to MAX_PRI3 in a primary limit detection block PLD. The output signals OUT_PRI1 through OUT_PRI3 and OUT_SEC1 through OUT_SEC3 are used to control illumination of the colour filter segments of the RGBCMY colour wheel. In order to extract the content for each secondary colour SEC1 to SEC3 up to the respective limits MAX_SEC1 to MAX_SEC3, the minimum of the respective two input primary colours is determined. MAX_SEC1 to MAX_SEC3 are constant values that are determined by the respective capacity of the colour filter segments SEC1 to SEC3 in terms of LSBs. The remaining content is displayed using the primary colour filter segments. In case multiple secondary colour filter segments are provided, the aforementioned means are provided for each of the secondary colours and the procedure is repeated accordingly. In the values RES_PRI1 through RES_PRI3 remain after subtracting of all secondary colours.

Secondary colour segments have been introduced at the cost of primary colour segments, as explained above. This is the reason why the magnitude of the signals OUT_PRI1 through OUT_PRI3 has a lower range than IN_PRI1 through IN_PRI3. The maximum signal values of output signals OUT_PRI1 through OUT_PRI3 are limited by the constant values MAX_PRI1 to MAX_PRI3, respectively. If one of those values were exceeded clipping would occur. Exceeding of one or more of the values MAX_PRI1 to MAX_PRI3 is detected in a detection primary limit detection block PLD. A signal CONTROL indicates whether and to which extent the threshold is exceeded for each primary. A functional block for saturation reduction and / or brightness reduction SR/BR is coupled to the output of each of the output signals. The functional block SR/BR performs corrective actions in order to avoid clipping in response to the CONTROL signal. An exemplary corrective action is a simple saturation reduction, another action is a simple brightness reduction. More complex transformation processes are conceivable. A number of other suitable corrective actions are known form the prior art and are not explained further.

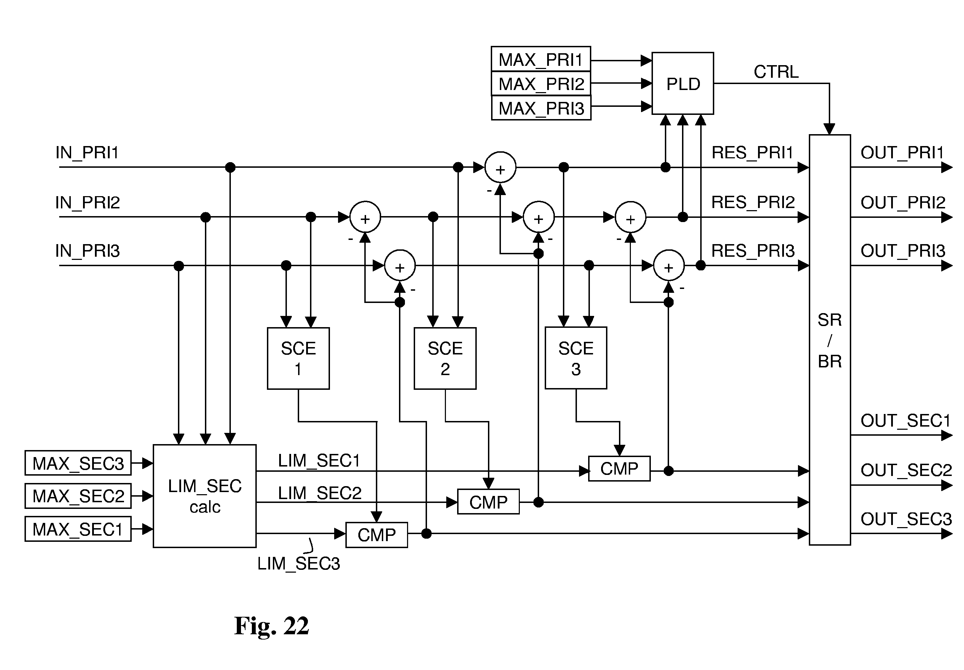

Further above a procedure for improving the rainbow effect by evenly distributing the white content among the transitions from secondary colour filter segments to the respective complementary primary colour filter segment was presented. An embodiment of an inventive driving circuit for achieving this improvement is depicted in Figure 22. The circuit shown in Figure 22 is adapted for colour wheels with more than one secondary colour segment. The circuit of Figure 22 is largely similar to the circuit of figure 21. A functional block "LIM_SEC calc" for analysing the input signals IN_PRI1 through IN_PRI3 is added. The added functional block detects the existence of secondary colour content. In case three secondary colours segments are present, the added functional block further determines a minimum white content from the input signals that is equal to the minimum of the three input signals. The minimum white content is divided it by the number of secondary colour segments, in this example three. The result of the division is the respective limit value LIM_SEC1 through LIM_SEC3 for the secondary colours. In case there is a secondary colour component on top of the white level, the value of this component is added to the corresponding signal LIM_SEC1 to LIM_SEC3, respectively. However, the value of LIM_SEC1 to LIM_SEC3 must not exceed the corresponding value of MAX_SEC1 to MAX_SEC3.

In case only two secondary colours segments are present, the added functional block determines the respective colour content. In case the additional colour filter segments are yellow and magenta, the content of light red light is determined, in case the additional colour filter segments are yellow and cyan, the content of light green light is determined, and in case the additional colour filter segments are magenta and cyan the content of light blue light is determined. The result is divided into two respective limit values, LIM_SEC1 and LIM_SEC2 for the two respective secondary colours. In case there is a secondary colour component on top of the found light blue, light green or light red light, the value of this particular component is added to the corresponding signal LIM_SEC1 and LIM_SEC2, respectively. As mentioned above, the value of LIM_SEC1 and LIM_SEC2 must not exceed the corresponding value of MAX_SEC1 and MAX_SEC2.

### Claims

1.  Colour filter arrangement for a display device with primary colour filter segments (R, G, B), **characterised in that** the colour filter arrangement has at least one additional secondary colour filter segment (C, M, Y).

2.  Colour filter arrangement according to claim 1, **characterised in that** the size of the at least one secondary colour segment (C, M, Y) is smaller than the size of a primary colour segment (R, G, B).

3.  Colour filter arrangement according to claim 1 or 2, **characterised in that** the colour filter segments (R, G, B, C, M, Y) are arranged adjacently to each other.

4.  Colour filter arrangement according to claim 3, **characterised in that** at least one primary colour filter segment (R, G, B) and a secondary colour filter segment (C, M, Y) that is representing the according complementary colour are arranged adjacent to each other.

5.  Display device for reproducing colour images, wherein the colour images are composed of sequentially reproduced monochromatic images, wherein light from a multispectral light source is projected onto an imaging device, wherein changeable colour filters are arranged in the path of the light between the light source and the imaging device, **characterised in that** the changeable colour filters include a colour filter arrangement according to any one of claims 1 to 4.

6.  Method for reproducing colour images by sequentially reproducing monochromatic images, wherein the monochromatic images are reproduced by projecting respectively filtered multispectral light onto an imaging device, wherein in a sequence of changeable filters at least one primary colour filter and a secondary colour filter that is representing the complementary colour to the primary colour are following each other, and wherein different brightness values are achieved by the imaging device passing on light to a screen as light pulses of corresponding different duration, **characterised in that** the imaging device is controlled such that minimum-length light pulses (Bit0) are located at a transition between a primary colour filter (R, G, B) and a corresponding complementary secondary colour filter (C, M, Y).

7.  The method of claim 6, **characterised in that** white image content is displayed by substantially equally distributing the light pulses for a desired brightness amongst all boundaries between secondary colour filters (C, M, Y) and corresponding complimentary primary colour filters (R, G, B).

8.  The method of claim 6 or 7, **characterised in that** the length of the light pulses corresponding to different brightness values of two successive secondary and corresponding primary colours increases symmetrically to the transition between the corresponding colour filters.

9. Method for reproducing colour images by sequentially reproducing monochromatic images, wherein the monochromatic images are reproduced by projecting respectively filtered multispectral light onto an imaging device, wherein in a sequence of changeable filters at least three different primary colour filters are following each other, and wherein different brightness values are achieved by the imaging device passing on light to a screen as light pulses of corresponding different duration, **characterised in that** the imaging device is controlled such that the temporal distance between the minimum-length light pulses (Bit0) of all colours that are required for reproducing the desired image is minimised.

10. The method of claim 9, **characterised in that** minimising the temporal distance is achieved by locating the minimum-length light pulses (Bit0) of at least two primary colours (R, G, B) following each other at a transition between the corresponding colour filters.

11. The method of claim 10, **characterised in that** the length of the light pulses corresponding to different brightness values of two successive primary colours increases symmetrically to the transition between the corresponding colour filters.

12. The method of any of the preceding claims 6 to 11, **characterised in that** the length of a first light pulse required for achieving a desired brightness level is split into a multiplicity of second light pulses distributed amongst all suitable combinations of colour filters, wherein the added length of the multiplicity of second light pulses essentially equals the length of the first light pulse.

13. The method of any one of the preceding claims 6 to 12, **characterised in that** light passing through transitions between two adjacent colour filter segments is used for increasing the maximum light output.

14. The method of any one of the preceding claims 6 to 13, further including the steps of monitoring the input signal detecting for exceeding of a predetermined value and reducing saturation and/or brightness of the input signal accordingly.

15. Driving circuit for display device for reproducing colour images by sequentially reproducing monochromatic images, wherein filtered light from a multispectral light source is passed via an imaging device to a screen, wherein the light filters include primary colour and secondary colour filters, **characterised in that** means are provided for generating signals for controlling the brightness of secondary colour light.

16. Driving circuit according to claim 15, **characterised in that** the means comprise a look-up-table and/or means for adding or subtracting.

17. Driving circuit according to claim 15 or 16, **characterised in that** means are provided for detecting exceeding of a predetermined value by a value of the input signal and means for reducing saturation and/or brightness value of the input signal accordingly.

Fig. 1    Prior Art

Fig. 2    Prior Art

Fig. 3

**Fig. 4**

**Fig. 5    Prior Art**

**Fig. 6**

**Fig. 7**

**Fig. 9**

**Fig. 8**

min. white

min. white

min. white

light output

R

M

G

Y

B

C

R

$t_R$   $t_M$   $t_G$   $t_Y$   $t_B$   $t_C$

t

**Fig. 10**

light output

M          G

a)    $t_R$    $t_M$    $t_G$    $t_Y$    $t_B$    $t_C$    t

light output

M    G

b)    $t_R$    $t_M$    $t_G$    $t_Y$    $t_B$    $t_C$    t

light output

M    G

c)    $t_R$    $t_M$    $t_G$    $t_Y$    $t_B$    $t_C$    t

$t_{frame}$

Fig. 11

**Fig. 12**

**Fig. 13**

min. white

G

R B

B R

G

min. white

light output

B R G B R G

t

a)

$t_B$ $t_R$ $t_G$ $t_B$ $t_R$ $t_G$

light output

B R G B R G

t

b)

$t_B$ $t_R$ $t_G$ $t_B$ $t_R$ $t_G$

$t_{frame}$

**Fig. 14**

**Fig. 15    Prior Art**

**Fig. 16**

**Fig. 17**

**Fig. 18**

light output

Y        B

a)    $t_G$    $t_Y$    $t_B$    $t_R$    t

light output

Y        B

b)    $t_G$    $t_Y$    $t_B$    $t_R$    t

light output

G        Y        B        R

c)    $t_G$    $t_Y$    $t_B$    $t_R$    t

$t_{frame}$

**Fig. 19**

Bit4    Bit3    Bit2    Bit1    Bit0

Bit5

Bit6

Bit4

Bit3
Bit2
Bit1
Bit0

B        G

Bit3
Bit2
Bit1
Bit6        C

Bit0

R

min. white

Bit5    Bit4    Bit3    Bit2    Bit1    Bit0

**Fig. 20**

Fig. 21

EP 1 615 449 A1

Fig. 22

European Patent Office

**EUROPEAN SEARCH REPORT**

Application Number

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
|  |  |  |  |

TECHNICAL FIELDS SEARCHED (Int.Cl.7)

The present search report has been drawn up for all claims

| Place of search | Date of completion of the search | Examiner |
|---|---|---|
|  |  |  |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)